# EUROPÄISCHE PATENTANMELDUNG

(11) **EP 4 187 731 A1**
(43) Veröffentlichungstag der Anmeldung: **31.05.2023**
(21) Anmeldenummer: 22401026.4
(22) Anmeldetag: 13.10.2022
(51) Int. Cl.: H02G 3/08, H02G 3/12

(54) **ELEKTRISCHES/ELEKTRONISCHES INSTALLATIONSGERÄT UND ANORDNUNG MINDESTENS ZWEIER SOLCHER**

(30) Priorität: 30.11.2021 DE 102021131353
(71) Anmelder: Albrecht Jung GmbH & Co. KG, 58579 Schalksmühle (DE)
(72) Erfinder: Kröninger, Christine, 58511 Lüdenscheid (DE); Koch, Eckhard, 58091 Hagen (DE)
(74) Vertreter: Fobbe, Tobias

(57) **Zusammenfassung**

Zu dem Zweck, ein elektrisches/elektronisches Installationsgerät 1 zur Erhöhung der zur Verfügung stehenden Einbautiefe zu schaffen, welches sich durch eine besonders einfache Nachrüstbarkeit auszeichnet, wird elektrisches/elektronisches Installationsgerät 1 zur Erhöhung der zur Verfügung stehenden Einbautiefe, vorgesehen zur Installation in Installationsdosen 2, die mit ihrem Dosenkörper bodenseitig in eine Wandausnehmung oder in eine Wandöffnung einer Installationswand eingesetzt werden, vorgeschlagen, wobei das elektrische/elektronische Installationsgerät 1 einen Designrahmen 9 und einen Träger 3 aufweist, der nach der fachgerechten Installation mündungsseitig am Dosenkörper und/oder der Oberfläche der Installationswand zur Anlage kommt, wobei das elektrische/elektronische Installationsgerät 1 zur Erhöhung der zur Verfügung stehenden Einbautiefe zwischen Dosenkörper und Träger 3 ein Distanzelement 4 aufweist, welches Aufputz angeordnet ist.

## Beschreibung

Die Erfindung betrifft ein elektrisches/elektronisches Installationsgerät zur Erhöhung der zur Verfügung stehenden Einbautiefe, vorgesehen zur Installation in Installationsdosen, die mit ihrem Dosenkörper bodenseitig in eine Wandausnehmung oder in eine Wandöffnung einer Installationswand eingesetzt werden, wobei das elektrische/elektronische Installationsgerät einen Designrahmen und einen Träger aufweist, der nach der fachgerechten Installation mündungsseitig am Dosenkörper und/oder der Oberfläche der Installationswand zur Anlage kommt

Ferner betrifft die Erfindung eine Anordnung von mindestens zwei solcher elektrischer/elektronischer Installationsgeräte.

Derartige elektrische/elektronische Installationsgeräte, beispielsweise bekannt aus DE 10 2013 104 259 83 B3, sind in der Regel dafür vorgesehen, in sogenannte Installationsdosen montiert zu werden. Damit auf einfache Art und Weise eine zuverlässige Befestigung der elektrischen/elektronischen Installationsgeräte gewährleistet ist, sind diese oftmals mit sogenannten Spreizkrallen ausgerüstet, welche über Spreizschrauben betrieben werden können. Zudem sind die Träger solcher elektrischer/elektronischer Installationsgeräte oftmals mit Befestigungsausnehmungen versehen, die zur Befestigung mit Dosenschrauben der Installationsdose zusammenwirken. Solche Installationsgeräte sind beispielsweise Steckdosen, Schalter oder Dimmer.

In jüngster Zeit wandern immer mehr Funktionen in die elektrischen/elektronischen Installationsgeräte, beispielsweise das Laden von Verbrauchern, einem mobilen Endgerät, via USB-Anschluss. Ebenfalls bekannt ist der Einbau von Aktoren, beispielsweise zum Schalten oder Dimmen, in die Installationsdosen.

In beiden Fällen werden in Anbetracht der durch solche Funktionsmodule beanspruchten Bauraumtiefe tiefe Installationsdosen gefordert, insbesondere um die normspezifischen Anforderungen bezüglich des einzuhaltenden Freiraums für Leitungsgut von 8 mm zu erfüllen.

Regelmäßig, insbesondere im Bestandsbau, sind jedoch flache Gerätedosen (Dosentiefe von 40 mm) verbaut, welche den Anforderungen an die Dosentiefe für den Einsatz von den angesprochenen Funktionsmodulen, beispielsweise Aktoren oder zusätzlicher Elektronik, nicht genügen.

Ausgehend von diesem diskutierten Stand der Technik liegt der Erfindung die Aufgabe zugrunde, ein elektrisches/elektronisches Installationsgerät zur Erhöhung der zur Verfügung stehenden Einbautiefe zu schaffen, welches sich durch eine besonders einfache Nachrüstbarkeit auszeichnet.

Gelöst wird diese Aufgabe durch ein elektrisches/elektronisches Installationsgerät, wobei zur Erhöhung der zur Verfügung stehenden Einbautiefe zwischen Dosenkörper und Träger ein Distanzelement angeordnet ist, welches Distanzelement Aufputz angeordnet ist.

Der Kerngedanke der Erfindung besteht darin, dass das erfindungsgemäße elektrische/elektronische Installationsgerät, welches in Installationsdosen, die mit ihrem Dosenkörper bodenseitig in eine Wandausnehmung oder in eine Wandöffnung einer Installationswand eingesetzt werden, installierbar ist, ein zwischen Dosenkörper und Träger angeordnetes Distanzelement aufweist. Es versteht sich, dass hierzu die Verkabelung im elektrischen/elektronischen Installationsgerät nicht verändert werden muss, da lediglich der Träger durch das zwischen Dosenkörper und Träger angeordnete Distanzelement einen bestimmten Betrag, beispielsweise 15 mm bis 20 mm, aus der Wand herauswandert, um die gewünschte Bauraumtiefe zu gewinnen.

Ferner weist das elektrische/elektronische Installationsgerät einen Designrahmen auf, der nach der fachgerechten Installation mündungsseitig am Dosenkörper und/oder der Oberfläche der Installationswand zur Anlage kommt. Dieser ein- oder mehrteilige Designrahmen kann im Falle einer Steckdose die Steckdosenzentralplatte umgeben. Hierdurch wird eine optisch ansprechende, mit wenig Nachrüstaufwand verbundene Möglichkeit geschaffen, den vorhandenen Bauraum auf ein hinreichendes Maß zu vergrößern, so dass, diesen Bauraum beanspruchende, Funktionsmodule, beispielsweise ein Aktor, der in die Installationsdose eingesetzt und an die Anschlusskabel angeschlossen wird, auch in Fällen eingesetzt werden kann, in denen die Unterputzdose lediglich 40 mm Einbautiefe aufweist. Damit wird die Anwendung von elektronischen/elektrischen Funktionsmodulen für den Bestandsbau erheblich vereinfacht und die Attraktivität solcher Produkte, insbesondere aus dem Smart-Home-Bereich, signifikant gesteigert.

Besonders bevorzugt umfasst das erfindungsgemäße elektrische/elektronische Installationsgerät ein Distanzelement, welches Ausnehmungen und Aufnahmen für in Schraubdome der Installationsdose eingreifende Befestigungsmittel, insbesondere Schrauben, aufweist, die die Festlegung des elektrischen/elektronischen Installationsgerätes an der Wand und/oder der Installationsdose ermöglichen.

Gemäß einer Weiterbildung dieses bevorzugten erfindungsgemäßen elektrischen/elektronischen Installationsgerätes weist das Distanzelement Ausnehmungen und Aufnahmen auf, welche Ausnehmungen und Aufnahmen so angeordnet sind, dass die Befestigungsmittel, an der Installationsdose vorbeiführen und an die Wand, insbesondere über Wanddübel, anschließbar sind. Hierdurch wird vorteilhafterweise erreicht, dass eine direkte, zusätzliche Verschraubung des Distanzelementes an der Wand ermöglicht wird, ohne dass eine Verschraubung mit der Installationsdose erforderlich ist. Ferner erlaubt diese Weiterbildung eine von der durch die Installationsdose bereitgestellten Durchmesser der Schraubdome unabhängige Schraubendurchmesserwahl. Damit können grundsätzlich Schrauben mit variablem Schraubendurchmesser - beispielsweise zur Befestigung des Distanzelementes an Installationsdosen eines zweiten Typs, etwa Schweizer Dosen, - verwendet werden, so dass die Installation weiter vereinfacht wird. Auch wird eine von der Installationsdose unabhängige, zusätzliche Befestigungsmöglichkeit geschaffen, was insbesondere für stark belastete Installationsgeräte, beispielsweise Arbeitssteckdosen, bei denen erhöhte mechanische Kräfte auf die Steckdose beim Ein- und Ausstecken eines Steckers in die Steckdose wirken, von Vorteil ist, um ein Lösen derselben wirksam zu vermeiden.

Besonders bevorzugt weist das erfindungsgemäße elektrische/elektronische Installationsgerät eine Form in der Draufsicht auf, die im Wesentlichen achteckig ist. In dieser Draufsicht auf das Distanzelement überschreitet dieses die Ausdehnung des Trägers nicht. In einer solchen Ausgestaltung wird vorteilhafterweise ermöglicht, dass der Anwender gegenüber einer quadratischen Form des Distanzelementes, welches mit den Außenkanten des Trägers bündig verläuft, eine Drehbarkeit des Trägers bezüglich des Distanzelementes als Montageerleichterung geboten bekommt. Hierdurch kann auch bei einer nicht optimal ausgerichteten Installationsdose beziehungsweise des an ihr festgelegten Distanzelementes eine nachträgliche Korrektur erreicht werden, indem der das Distanzelement kontaktierende Träger bezüglich des Distanzelementes rotiert wird, bis zwei Außenkanten des Träger in Waage verlaufen. Zweckmäßigerweise schließen in einer Weiterbildung dieses erfindungsgemäßen elektrischen/elektronischen Installationsgerätes vier Paare von benachbarten Außenkanten des Distanzelementes einen Winkel von weniger als 180° bis 160° ein. Hierdurch kann eine Winkelkorrektur des Trägers bezüglich des Distanzelementes von bis zu 10° je Richtung erreicht werden, was für den regelmäßigen Anwendungsfall, lediglich leichter nicht optimal ausgerichteter Installationsdosen beziehungsweise daran angeschlossener Distanzelemente, als ausreichend anzusehen sein dürfte.

Gemäß unterschiedlichen Weiterbildungen des bevorzugten erfindungsgemäßen elektrischen/elektronischen Installationsgerätes ist dieses als Steckdose oder als Taster und/oder Schalter oder als Dimmer ausgeführt.

Ferner betrifft die Erfindung eine Anordnung mindestens zweier solcher elektrischer/elektronischer Installationsgeräte. Bei dieser Anordnung sind die Installationsgeräte so benachbart in einer Installationsdose eingesetzt, dass die zueinander weisenden Seiten der Träger parallel zueinander angeordnet sind, während die Distanzelemente bezüglich ihres symmetrischen Anordnung bezüglich der Träger rotatorisch ausgelenkt sind, ohne die Grundfläche der Träger zu verlassen. Hierdurch wird erreicht, dass die Distanzelemente und Träger unabhängig voneinander ausgerichtet werden können, was die Montage der erfindungsgemäßen elektrischen/elektronischen Installationsgeräte erheblich vereinfacht.

Nachfolgend ist die Erfindung unter Bezugnahme auf die beigefügten Figuren anhand diverser Ausführungsbeispiele beschrieben. Es zeigen:
- **Fig. 1**:: eine Explosionsdarstellung des erfindungsgemäßen elektrischen/elektronischen Installationsgerätes, hier: zum Anschluss an eine Installationsdose mittels Schrauben,
- **Fig. 2:**: eine perspektivische Darstellung des erfindungsgemäßen Distanzelementes,
- **Fig. 3:**: eine perspektivische Darstellung des erfindungsgemäßen Distanzelementes von unten,
- **Fig. 4:**: eine Draufsicht auf das erfindungsgemäße Distanzelement, wobei die Form im Wesentlichen achteckig ist,
- **Fig. 5:**: eine Anordnung zweier erfindungsgemäßer Distanzelemente bezüglich der jeweiligen Träger (links: symmetrische Anordnung, rechts: die Distanzelemente sind bezüglich ihrer symmetrischen Anordnung bezüglich der Träger rotatorisch ausgelenkt, ohne die Grundfläche der Träger zu verlassen).

In den verschiedenen Figuren sind gleiche Teile stets mit den gleichen Bezugszeichen versehen und werden daher in der Regel auch jeweils nur einmal benannt beziehungsweise erwähnt.

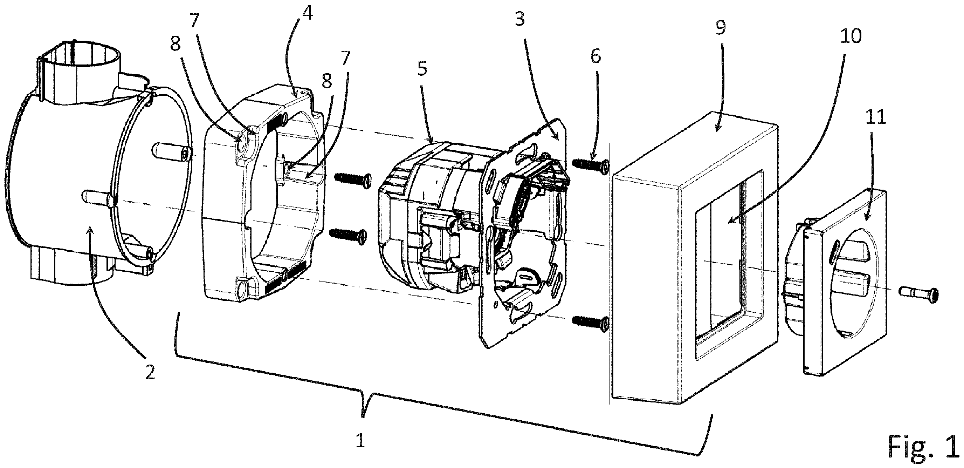

Das in Figur 1 in einer eine perspektivischen Explosionsdarstellung gezeigte erfindungsgemäße elektrische/elektronische Installationsgerät 1 ist zum Anschluss an eine Installationsdose 2 geeignet. Um die durch die Installationsdose 2 bereitgestellte Bauraumtiefe zu vergrößern, ist zwischen den Träger 3 und den Rand der Installationsdose 2 ein Distanzelement 4 geschaltet. Das Distanzelement 4 weist regelmäßig eine konzentrisch angeordnete, annähernd kreisförmige, Ausnehmung auf, durch welche Ausnehmung beispielsweise ein Sockel 5, insbesondere einer Steckdose, bis in die Installationsdose 2 hinein hindurchgreifen kann. Mittels Schrauben 6 ist bei der in Figur 1 dargestellten Ausführungsform der Träger 3 - an ihn ist der Sockel 5 angeschlossen - an dem Distanzelement 4 fixiert. Besonders einfach ist es, wenn so lange Schrauben verwendet werden, dass die Schrauben 6 mit ihrem Schraubenkopf am Träger 3 anliegen, sich durch das Distanzelement 4 erstrecken und an die Installationsdose 2 eingreifen, vorzugsweise in dafür vorgesehene Schraubdome. Regelmäßig weist das Distanzelement 4 Ausnehmungen 7 und Aufnahmen 8 für in Schraubdome der Installationsdose 2 eingreifende Befestigungsmittel, insbesondere Schrauben 6, auf, die die Festlegung des elektrischen/elektronischen Installationsgerätes 1 an der Wand und/oder der Installationsdose 2 ermöglichen, wobei bevorzugt zumindest ein Teil der Ausnehmungen 7 und Aufnahmen 8 so angeordnet sind, dass die Befestigungsmittel an der Installationsdose 2 vorbeiführen und an die Wand, insbesondere über Wanddübel, anschließbar sind. Ferner weist das erfindungsgemäße elektrische/elektronische Installationsgerät 1 einen Designrahmen 9 auf, der den Träger 3 umgibt und mittig eine Ausnehmung 10 für ein Betätigungselement oder wie hier: einer Steckdosenzentralplatte 11, aufweist.

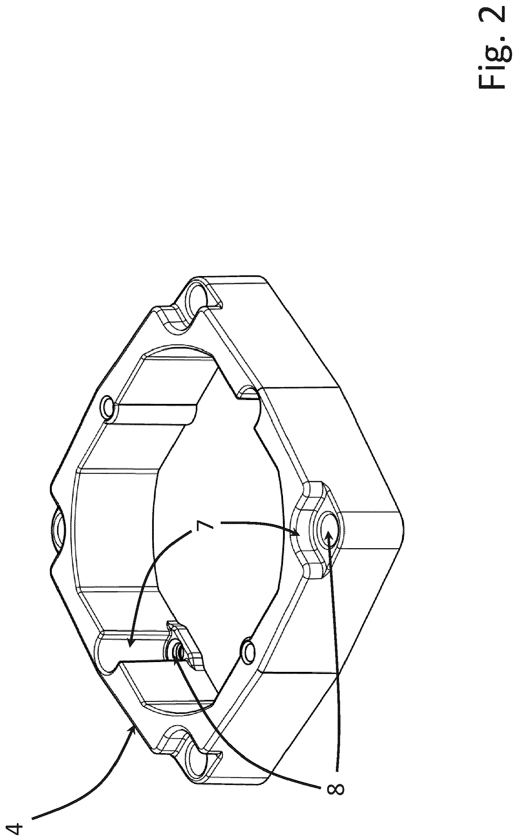

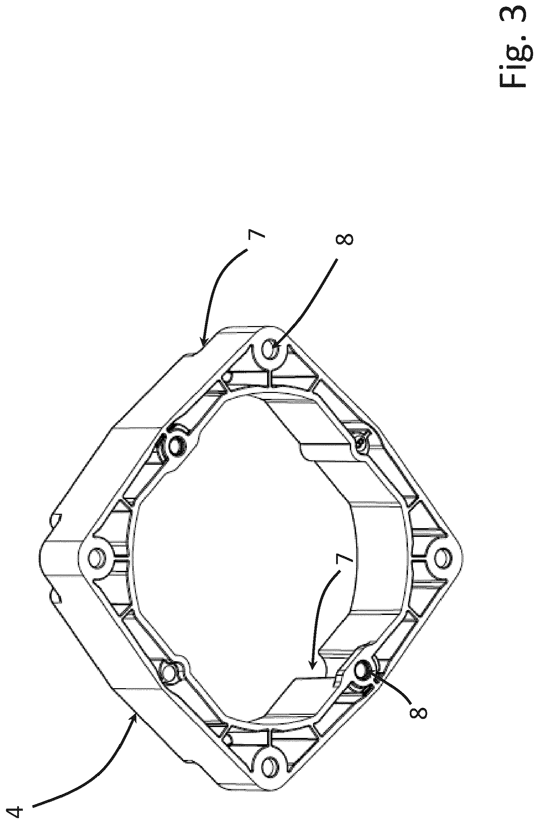

In den Figuren 2 und 3 ist eine perspektivische Darstellung des erfindungsgemäßen Distanzelementes 4 gegeben, welche Ausnehmungen 7 und Aufnahmen 8 für in Schraubdome der Installationsdose 2 eingreifende Befestigungsmittel, insbesondere Schrauben 6, aufweist, die die Festlegung des elektrischen/elektronischen Installationsgerätes 1 an der Wand ermöglichen, wobei bevorzugt die Ausnehmungen 7 und Aufnahmen 8 so angeordnet sind, dass die Befestigungsmittel an der Installationsdose 2 vorbeiführen und an die Wand, insbesondere über Wanddübel, anschließbar sind. Hierdurch wird erreicht, dass der Anschluss des elektrischen/elektronischen Installationsgerätes 1 besonders stabil erfolgen kann, da ein direkter Wandanschluss möglich wird.

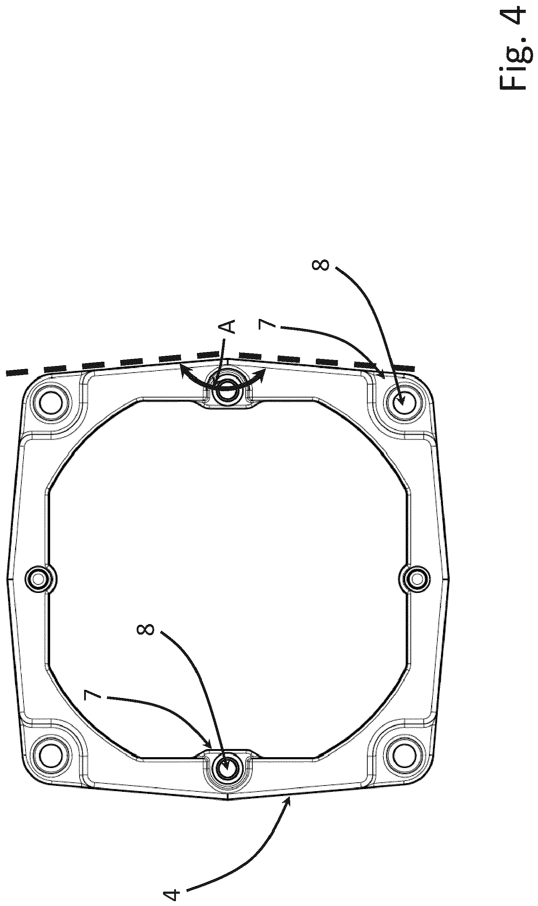

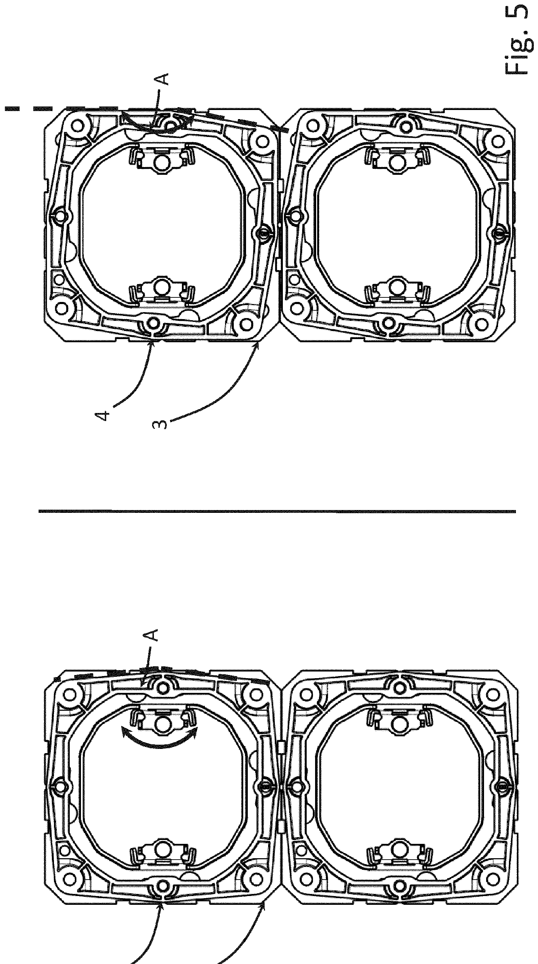

In Figur 4 ist eine Draufsicht auf das erfindungsgemäße Distanzelement 4, wobei die Form im Wesentlichen achteckig ist, gezeigt. Ein solchermaßen ausgebildetes Distanzelement 4 ist in Figur 5 zweifach zusammen mit einem jeweiligen Träger 3, was einer regelmäßigen Einbausituation - beispielsweise zwei benachbarte Taster - nahekommt, abgebildet. Dabei ist zu erkennen, dass beide Distanzelemente 4 die Ausdehnung des Trägers 3 nicht überschreiten. In einer solchen Ausgestaltung wird vorteilhafterweise ermöglicht, dass der Anwender gegenüber einer quadratischen Form des Distanzelementes 4, welches mit den Außenkanten des Trägers 3 bündig verläuft, eine Drehbarkeit des Trägers 3 bezüglich des Distanzelementes 4 als Montageerleichterung geboten bekommt. Hierdurch kann auch bei einem nicht optimal ausgerichteten Distanzelement 4 in der Installationsdose 2 eine nachträgliche Korrektur erreicht werden, indem der das Distanzelement 4 kontaktierende Träger 3 bezüglich des Distanzelementes 4 rotiert wird, bis zwei Außenkanten des Trägers 3 in Waage verlaufen. Zweckmäßigerweise schließen in einer Weiterbildung dieses erfindungsgemäßen elektrischen/elektronischen Installationsgerätes 1 vier Paare von benachbarten Außenkanten des Distanzelementes 4 einen Winkel A von weniger als 180° bis 160° ein. Hierdurch kann eine Winkelkorrektur des Trägers 3 bezüglich des Distanzelementes 4 von bis zu 20° (10° in jede Richtung) erreicht werden, was für den regelmäßigen Anwendungsfall, als ausreichend anzusehen sein dürfte.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- **1**: elektrisches/elektronisches Installationsgerät
- **2**: Installationsdose
- **3**: Träger
- **4**: Distanzelement
- **5**: Sockel
- **6**: Schraube
- **7**: Ausnehmung
- **8**: Aufnahme
- **9**: Designrahmen
- **10**: Ausnehmung
- **11**: Steckdosenzentralplatte

- **A**: Winkel

## Patentansprüche

1. Elektrisches/elektronisches Installationsgerät zur Erhöhung der zur Verfügung stehenden Einbautiefe, vorgesehen zur Installation in Installationsdosen (2), die mit ihrem Dosenkörper bodenseitig in eine Wandausnehmung oder in eine Wandöffnung einer Installationswand eingesetzt werden, wobei das elektrische/elektronische Installationsgerät (1) einen Designrahmen (9) und einen Träger (3) aufweist, der nach der fachgerechten Installation mündungsseitig am Dosenkörper und/oder der Oberfläche der Installationswand zur Anlage kommt, **dadurch gekennzeichnet, dass** das elektrische/elektronische Installationsgerät (1) zur Erhöhung der zur Verfügung stehenden Einbautiefe zwischen Dosenkörper und Träger (3) ein Distanzelement (4) aufweist, welches Aufputz angeordnet ist.

2. Elektrisches/elektronisches Installationsgerät nach Anspruch 1, **dadurch gekennzeichnet, dass** das Distanzelement (4) Ausnehmungen (7) und Aufnahmen (8) für in Schraubdome der Installationsdose (2) eingreifende Befestigungsmittel, insbesondere Schrauben (6), aufweist, die die Festlegung des elektrischen/elektronischen Installationsgerätes (1) an der Wand und/oder der Installationsdose (2) ermöglichen.

3. Elektrisches/elektronisches Installationsgerät nach Anspruch 2, **dadurch gekennzeichnet, dass** die Ausnehmungen (7) und Aufnahmen (8) so angeordnet sind, dass die Befestigungsmittel an der Installationsdose (2) vorbeiführen und an die Wand, insbesondere über Wanddübel, anschließbar sind.

4. Elektrisches/elektronisches Installationsgerät nach einem der Ansprüche 1 bis 3, **dadurch gekennzeichnet, dass** die Form des Distanzelementes (4) in einer Draufsicht im Wesentlichen achteckig ist, wobei das Distanzelement (4) in einer Draufsicht die Ausdehnung des Trägers (3) nicht überschreitet.

5. Elektrisches/elektronisches Installationsgerät nach Anspruch 4, **dadurch gekennzeichnet, dass** vier Paare von benachbarten Außenkanten des Distanzelementes (4) einen Winkel von weniger als 180° bis 160° einschließen.

6. Elektrisches/elektronisches Installationsgerät nach einem der Ansprüche 1 bis 5, **dadurch gekennzeichnet, dass** das elektrische/elektronische Installationsgerät (1) als Steckdose ausgeführt ist.

7. Elektrisches/elektronisches Installationsgerät nach einem der Ansprüche 1 bis 5, **dadurch gekennzeichnet, dass** das elektrische/elektronische Installationsgerät (1) als Taster und/oder Schalter ausgeführt ist.

8. Elektrisches/elektronisches Installationsgerät nach einem der Ansprüche 1 bis 5, **dadurch gekennzeichnet, dass** das elektrische/elektronische Installationsgerät (1) als Dimmer ausgeführt ist.

9. Anordnung von mindestens zwei elektrischen/elektronischen Installationsgeräten gemäß einem der Ansprüche 1 bis 8, **dadurch gekennzeichnet, dass** die Installationsgeräte (1) so benachbart in einer Installationsdose (2) eingesetzt sind, dass die zueinander weisenden Seiten der Träger (3) parallel zueinander angeordnet sind, während die Distanzelemente (4) bezüglich ihres symmetrischen Anordnung bezüglich der Träger (3) rotatorisch ausgelenkt sind, ohne die Grundfläche der Träger (3) zu verlassen.
